Europäisches Patentamt

European Patent Office

Office européen des brevets

(19)

(11) Veröffentlichungsnummer: **0 271 788**
**A2**

(12) **EUROPÄISCHE PATENTANMELDUNG**

(21) Anmeldenummer: **87118008.9**

(22) Anmeldetag: **05.12.87**

(51) Int. Cl.⁴: **C08G 18/42 , C08G 18/76**

(30) Priorität: **13.12.86 DE 3642666**

(43) Veröffentlichungstag der Anmeldung:
**22.06.88 Patentblatt 88/25**

(84) Benannte Vertragsstaaten:
**AT BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Scherzer, Dietrich, Dr.**
**Millfield House 74 Cropwell Road**
**Radcliff-on-Trent Nottingham NG12 2JG(GB)**
Erfinder: **Streu, Joachim, Dr.**
**Grellestrasse 24**
**D-2840 Diepholz(DE)**

(54) **Verfahren zur Herstellung von im wesentlichen geschlossenzelligen, Urethan- oder Urethan- und Isocyanuratgruppen enthaltenden Hartschaumstoffen und deren Verwendung.**

(57) Die Erfindung beschreibt ein Verfahren zur Herstellung von im wesentlichen geschlossenzelligen Urethan- oder Urethan-und Isocyanuratgruppen enthaltenden Hartschaumstoffen durch Umsetzung von
  a) organischen Polyisocyanaten mit
  b) höhermolekularen Polyester-polyolen, die Einheiten mit einer oder mehreren der Strukturen
$-O-CH_2-CH(CH_3)-CH_2-CH_2-CH_2-O-$    (I),
$-O-CH_2-CH(C_2H_5)-CH_2-CH_2-O-$    (II),
$-OC-CH(CH_3)-CH_2-CH_2-CO-$    (III) und
$-OC-CH(C_2H_5)-CH_2-CO-$    (IV)
gebunden enthalten oder Mischungen aus den genannten Polyester-polyolen und üblichen Polyester- und/oder Polyether-polyolen in Gegenwart von
  c) Katalysatoren und
  d) Treibmitteln sowie gegebenenfalls
  e) Kettenverlängerungs-und/oder Vernetzungsmiteln,
  f) Hilfsmitteln und/oder Zusatzstoffen.
Die Urethan-oder Urethan-und Isocyanuratgruppen enthaltenden Hartschaumstoffe eigenen sich zum Verstärken von mechanischen Konstruktionsteilen oder als Isoliermaterial.

EP 0 271 788 A2

## Verfahren zur Herstellung von im wesentlichen geschlossenzelligen, Urethan-oder Urethan-und Isocyanuratgruppen enthaltenden Hartschaumstoffen und deren Verwendung

Die Herstellung von zelligen und kompakten Urethan-und/oder Isocyanuratgruppen enthaltenden Kunststoffen ist bekannt.

Eine Übersicht über die Herstellung und Eigenschaften von Polyurethan-(PU)-Hartschaumstoffen wird beispielsweise im Kunststoff-Handbuch, Band VII, "Polyurethane", herausgegeben von R. Vieweg und A. Höchtlen, Seiten 504 ff. gegeben (Verlag Carl Hanser, München 1966). Polyisocyanurat-(PIR)-Schaumstoffe bzw. modifizierte PIR-Schaumstoffe werden beispielsweise beschrieben in Advances in Urethane Science and Technology, Vol. 3, Seiten 141 ff und Vol. 2, Seiten 241 ff. (Technomic Publishing Co., Inc., 1974 und 1973).

Zur Herstellung der PU-und/oder PIR-Hartschaumstoffe werden üblicherweise aromatische Polyisocyanate mit höhermolekularen Polyolen, vorzugsweise Polyether-oder Polyester-polyolen, in Gegenwart von Treibmitteln, Katalysatoren, Flammschutzmitteln und anderen Hilfs-und Zusatzstoffen zur Reaktion gebracht. Es ist ferner bekannt, anstelle von Polyether-oder Polyester-polyolen, Mischungen der genannten Aufbaukomponenten zu verwenden. Mitentscheidend für die Durchführung dieser Maßnahme war eine Kostensenkung, die durch Abmischung von teueren zur Herstellung von qualitativ hochwertigen PU-Hartschaumstoffen geeigneten Polyester-polyolen mit preisgünstigen Polyether-polyolen erzielt wird. Geeignete Polyesterpolyole mit niedriger Viskosität zur Herstellung von PU-Hartschaumstoffen mit guten mechanischen Eigenschaften werden beispielsweise in der DE-A-27 04 196 beschrieben. Zur Herstellung der Polyester-polyole werden Dicarbonsäuregemische aus Bernstein-, Glutar-und Adipinsäure in bestimmten Mengenverhältnissen mit einem Isopropanolamingemisch und/oder Hexantriolisomerengemisch sowie gegebenenfalls anderen niedermolekularen mehrwertigen Alkoholen polykondensiert.

Durch die Verwendung von Polyester-polyolen als höhermolekulare Polyhydroxylverbindung zur Herstellung von Urethan-und Isocyanuratgruppen enthaltenden Hartschaumstoffen kann insbesondere deren Flammwidrigkeit verbessert und die Sprödigkeit reduziert werden. Nachteilig ist jedoch, daß Polyesterpolyole, aufgrund ihrer relativ hohen Polarität, im Vergleich zu Polyether-polyolen, vorzugsweise Polyoxypropylen-polyolen, mit den als Treibmitteln eingesetzten niedrigsiedenden halogenierten Kohlenwasserstoffen nur unzureichend mischbar sind. Insbesondere bei flammschutzmittelhaltigen Isocyanuratgrupen bildenden Polyurethan-Hartschaumformulierungen mit hohem Isocyanatindex, deren Polyolkomponente überwiegend aus difunktionellen Polyester-polyolen besteht, können ausreichende Mengen an halogenierten Kohlenwasserstoffen als Treibmittel nicht mehr im Polyester-polyol gelöst werden.

Zur Überwindung dieses Nachteils werden die organischen Polyisocyanate z.B. mit den niedrigsiedenden Halogenkohlenwasserstoffen verdünnt. Es werden ferner zusätzlich chemisch wirkende Treibmittel, wie z.B. Wasser oder Carboxylgruppen aufweisende Verbindungen, eingesetzt, die mit Isocyanaten unter Bildung von Kohlendioxid reagieren.

Nach Angaben der DE-A-29 35 402 (GB-E 24 524) werden zur Verbesserung der Verträglichkeit von Polyester-polyolen und halogenierten Kohlenwasserstoffen als Löslichkeitsvermittler alkoxilierte Alkylphenole verwendet.

Die Aufgabe der vorliegenden Erfindung bestand darin, möglichst kostengünstig Urethan-oder Urethan-und Isocyanuratgruppen enthaltende Hartschaumstoffe mit guten mechanischen Eigenschaften, hoher Hydrolysestabilität und insbesondere auch niedrigen Dichten, z.B. von 25 bis 35 g/l, herzustellen. Auf die Verwendung von teueren, die mechanischen Eigenschaften üblicherweise verschlechternden Löslichkeitsvermittler sollte verzichtet werden.

Diese Aufgabe konnte überraschenderweise gelöst werden durch die vollständige oder teilweise Verwendung von Polyester-polyolen mit Alkylseitengruppen als höhermolekulare Polyole zur Herstellung der Polyurethan-und vorzugsweise der Urethangruppen enthaltenden Polyisocyanuratschaumstoffe.

Gegenstand der Erfindung ist somit ein Verfahren zur Herstellung von im wesentlichen geschlossenzelligen, Urethan-oder Urethan-und Isocyanuratgruppen enthaltenden Hartschaumstoffen durch Umsetzung von

a) organischen Polyisocyanaten mit
b) höhermolekularen Polyolen in Gegenwart von
c) Katalysatoren und
d) Treibmitteln sowie gegebenenfalls

e) Kettenverlängerungs-und/oder Vernetzungsmitteln,

f) Hilfsmitteln und/oder Zusatzstoffen, das dadurch gekennzeichnet ist, daß man als Polyole (b) Polyester-polyole verwendet, die Einheiten mit einer oder mehreren der Strukturen

-O-CH$_2$-CH(CH$_3$)-CH$_2$-CH$_2$-CH$_2$-O-     (I),

-O-CH$_2$-CH(C$_2$H$_5$)-CH$_2$-CH$_2$-O-     (II),

-OC-CH(CH$_3$)-CH$_2$-CH$_2$-CO-     (III) und

-OC-CH(C$_2$H$_5$)-CH$_2$-CO-     (IV)

gebunden enthalten.

Gegenstand der Erfindung ist ferner die Verwendung der im wesentlichen geschlossenzelligen Urethan- oder vorzugsweise Urethan-und Isocyanuratgruppen enthaltenden Hartschaumstoffen, die nach dem Verfahren des Anspruchs 1 hergestellt werden, zum Verstärken von mechanischen Konstruktionsteilen oder als Isoliermaterial.

Bei linearen Polyester-polyolen, z.B. Ethylenglykol-Butandiol-1,4-polyadipaten, sind zwischen den Molekülketten über die gesamte Länge sowohl starke Dipol-Dipol-Wechselwirkungen als auch Dispersionskräfte wirksam. Aufgrund dieser starken zwischenmolekularen Wechselwirkungen und des damit verbundenen hohen Ordnungsgrades ist es halogenierten Kohlenwasserstoffen nicht möglich, zwischen die Molekülketten einzudringen und diese zu solvatisieren. Derartige Polyester-polyole und die als Treibmittel verwendbaren halogenierten Kohlenwasserstoffe weisen daher eine nur geringe Mischbarkeit auf. Überraschenderweise kann diese zwischenmolekulare Wechselweirkung durch den Einsatz von Polyester-polyolen mit Alkylseitengruppen vermindert werden. Die halogenierten Kohlenwasserstoffe können vermutlich die lockeren Bindungen zwischen den Polyester-polyolen teilweise spalten, so daß sie wesentlich besser mit den Polyester-polyolen mischbar sind. Vorteilhaft ist ferner, daß die erfindungsgemäß verwendbaren Polyester-polyole eine niedrige Viskosität aufweisen und daher bei Raumtemperatur flüssig und leicht verarbeitbar sind.

Die erfindungsgemäß verwendbaren Polyester-polyole, die vorzugsweise Einheiten der Struktur

-O-CH$_2$-CH(CH$_3$)-CH$_2$-CH$_2$-CH$_2$-O     (I)

und/oder

-O-CH$_2$-CH(C$_2$H$_5$)-CH$_2$-CH$_2$-O-     (II)

oder

-OC-CH(CH$_3$)-CH$_2$-CH$_2$-CO-     (III)

und/oder

-OC-CH(C$_2$H$_5$)-CH$_2$-CO-     (IV)

gebunden enthalten, besitzen eine durchschnittliche Funktionalität von 1 bis 3, vorzugsweise von 2 bis 2,5, eine Hydroxylzahl von 100 bis 400, vorzugsweise 120 bis 400, eine Säurezahl von kleiner als 10 mg KOH/g, vorzugsweise kleiner als 2 mg KOH/g und insbesondere von 1,5 bis 0,1 mg KOH/g, und eine Viskosität bei 25°C von 200 bis 10$^5$, vorzugsweise von 500 bis 10 000 m.Pas. Die Produkte bestehen zu mindesten 20 Gew.-%, vorzugsweise zu mindestens 25 Gew.-% und insbesondere zu mindestens 30 Gew.-%, bezogen auf das Gesamtgewicht, aus Einheiten mit einer oder mehreren der Strukturen (I) bis (IV) und zeichnen sich durch eine hohe Verträglichkeit mit halogenierten Kohlenwaserstoffen aus.

Aus diesen Polyester-polyolen hergestellte Polyurethan-oder vorzugsweise Polyurethangruppen enthaltende Polyisocyanurat-Hartschaumstoffe besitzen ein hohes mechanisches Eigenschaftsniveau, speziell eine gute Hydrolysestabilität und eignen sich für zahlreiche technische Anwendungen, insbesondere zum Verstärken von mechanischen Konstruktionsteilen oder als Isoliermaterial.

Die erfindungsgemäß verwendbaren Polyester-polyole werden zweckmäßigerweise hergestellt durch Polykondensation in Gegenwart oder Abwesenheit von Verdünnungsmitteln oder insbesondere in der Schmelze sowie in Gegenwart oder Abwesenheit von Katalysatoren aus organischen Polycarbonsäuren und/oder Polycarbonsäurederivaten, z.B. -alkylestern und/oder Anhydriden, aus der Gruppe der 2-Methylglutarsäure, 2-Ethylbernsteinsäure oder organischen Dicarbonsäuren, z.B. aliphatischen Dicarbonsäuren mit 2 bis 12 C-Atomen, vorzugsweise 4 bis 6 C-Atomen, cycloaliphatischen Dicarbonsäuren mit 8 bis 24 C-Atomen, vorzugsweise 12 bis 18 C-Atomen, aromatischen Dicarbonsäuren mit 8 bis 24 C-Atomen, vorzugsweise 8 Kohlenstoffatomen oder Mischungen aus mindestens zwei Dicarbonsäuren und/oder -derivaten und mehrstufigen aliphatischen Alkoholen aus der Gruppe 2-Methylpentandiol-1,5, 2-Ethylbutandiol-1,4, der linearen oder verzweigten, gegebenenfalls Etherbrücken aufweisenden 2-bis 4-wertigen aliphatischen Alkohole oder Mischungen aus mindestens zwei der mehrwertigen aliphatischen Alkohole mit der Maßgabe, daß die eingesetzten Ausgangsstoffe mindestens eine Verbindung aus der Gruppe 2-Methylpentandiol-1,5, 2-Ethylbutandiol-1,4, 2-Methylglutarsäure und/oder 2-Ethylbernsteinsäure oder der entsprechenden Dicarbonsäurederivate enthalten.

Beispielhaft genannt seien als aliphtische Dicarbonsäuren Dodecandi-, Undecandi-, Sebacin-, Azelain-, Kork-, Pimelin-, Adipin-, Glutar-, Bernstein-, Malon-und Oxalsäure, als cycloaliphatische Dicarbonsäuren Hexahydroisophthalsäure, Hexahydroterephthalsäure und Hexahydrophthalsäure und als aromatische Dicarbonsäuren Isophthalsäure, Terephthalsäure und Phthalsäure. Anstelle der organischen Dicarbonsäuren können auch die entsprechenden Dicarbonsäurederivate, wie z.B. Dicarbonsäuren-mono-und/oder - dialkylester mit 1 bis 4 C-Atomen, vorzugsweise 1 bis 2-C-Atomen im Alkylrest, wie z.B. Dicarbonsäure-mono-und/oder -di-methyl-, -ethyl-, n-propyl-, isopropyl-und -butylester, und/oder -anhydride eingesetzt werden. Vorzugsweise Anwendung finden Phthalsäure, Phthalsäure-mono-und/oder -di-methylester, Phthalsäureanhydrid, Mischungen aus Bernstein-, Glutar-und Adipinsäure, vorteilhafterwiese im Gewichtsverhältnis von 20 bis 35:35 bis 50:20 bis 32 Gew.-Teilen und insbesondere Adiphinsäure.

Neben 2-Methylpentandiol-1,5, 2-Ethylbutandiol-1,4 oder Mischungen aus 2-Methylpentandiol-1,5 und 2-Ethylbutandiol-1,4, beispielsweise im Gewichtsverhältnis von 1:99 bis 99:1, vorzugsweise von 20:80 bis 80:20 finden als aliphatische 2-bis 4-wertige, vorzugsweise 3-wertige und insbesondere 2-wertige Alkohole Verwendung. Verzweigt und/oder vorzugsweise lineare Alkandiole mit 2 bis 12 Kohlenstoffatomen, vorzugsweise 2 bis 6 Kohlenstoffatomen im Alkylenrest, Polyoxyalkylen-diole, vorteilhafterweise solche auf der Grundlage von 1,2-Propylenoxid und/oder Ethylenoxid, mit einem Molekulargewicht von 106 bis 622, vorzugsweise von 106 bis 262, lineare oder verzweigte Alkantriole mit 3 bis 6 Kohlenstoffatomen und/oder Pentaerythrit. Beispielhaft genannt seien Alkandiole, wie z.B. 2,2-Dimethyl-propandiol-1,3, 2,2,4-Trimethyl-hexandiol-1,6, 1,3-Butandiol, Ethandiol, 1,2-bzw. 1,3-Propandiol, 1,4-Butandiol, 1,5-Pentandiol, 1,6-Hexandiol, 1,8-Octandiol, 1,10-Decandiol und 1,12-Dodecandiol, Polyoxyalkylen-diole, wie z.B. Diethylen-glykol, Trioxyethylenglykol, Tetraoxyethylen-glykol und höhermolekulare Polyoxyethylenglykole, Dipropylen-glykol, Trioxypropylen-glykol, Tetraoxypropylen-glykol und höhermolekulare Polyoxypropylen-glykole sowie Polyoxypropylen-polyoxyethylen-glykole und Alkantriole, wie z.B. Trimethylol-ethan, Trimethylol-propan und Glycerin. Die mehrwertigen aliphatischen, gegebenenfalls Ethergruppen enthaltende Alkohole können einzeln oder in Form von Mischungen eingesetzt werden. Vorzugsweise Anwendung finden: Ethandiol, 1,2-bzw. 1,3-Propandiol, 1,4-Butandiol, 1,5-Pentandiol, 1,6-Hexandiol, Diethylen-glykol, Dipropylen-glykol, Glycerin, Trimethylolpropan oder eine Mischung aus mindestens zwei der mehrwertigen aliphatischen Alkohole.

Sofern zur Herstellung der Polyester-polyole als Polycarbonsäuren und/oder -derivate nicht ausschließlich 2-Methylglutarsäure und/oder 2-Ethylbernsteinsäure und als mehrwertige Alkohole nicht ausschließlich 2-Methylpentandiol-1,5 und/oder 2-Ethylbutandiol-1,4 verwendet werden, können auch Mischungen aus Polycarbonsäuren und/oder -derivaten und Mischungen aus mehrwertigen Alkoholen eingesetzt werden, die zweckmäßigerweise bestehen aus ungefähr 0 bis ungefähr 100 Gew.-%, vorzugsweise 20 bis 80 Gew.-% 2-Methylglutarsäure und/oder 2-Ethylbernsteinsäure und ungefähr 100 bis ungefähr 0 Gew.-%, vorzugsweise 80 bis 20 Gew.-% einer aliphatischen, cycloaliphatischen und/oder aromatischen Dicarbonsäure und/oder den entsprechenden -derivaten bzw. ungefähr 0 bis ungefähr 100 Gew.-%, vorzugsweise 20 bis 80 Gew.-% 2-Methylpentandiol-1,5 und/oder 2-Ethylbutandiol-1,4 und ungefähr 100 bis ungefähr 0 Gew.-%, vorzugsweise 80 bis 20 Gew.-% mindestens eines linearen oder verzweigten, gegebenenfalls Etherbrücken aufweisenden aliphatischen 2-bis 4-wertigen Alkohols, wobei die Gewichtsprozente bezogen sind auf das Gesamtgewicht der jeweiligen Mischung und auch hier der Vorbehalt gültig ist, daß die hergestellten Polyester-polyole mindestens 20 Gew.-%, bezogen auf das Gesamtgewicht, Einheiten mit den Strukturen (I) und/oder (II) und/oder (III) und/oder (IV) gebunden enthalten.

Wie bereits dargelegt wurde, können die organischen Polycarbonsäuren und/oder -derivate und mehrwertigen Alkohole katalysatorfrei oder in Gegenwart von Veresterungs-oder Umesterungskatalysatoren polykondensiert werden. Als Veresterungskatalysatoren kommen beispielsweise Eisen-, Cadmium-, Kobalt-, Blei-, Zink-, Antimon-, Magnesium-, Titan-, und Zinnkatalysatoren in Form von Metallen, Metalloxiden oder -salzen in Betracht. Vorzugsweise verwendet werden Zinnsalze, z.B. gemäß US 3 162 616, Zinndioctoat und/oder Tetrabutylorthotitanat. Als Umesterungeskatalysatoren seien beispielhaft genannt: Zinndioctoat und Tetrabutylorthotitanat.

Zur Herstellung der Polyester-polyole werden die organischen Polycarbonsäuredialkylester, vorzugsweise 2-Methylglutarsäuredimethylester und/oder 2-Ethylbernsteinsäuredimethylester, gegebenenfalls im Gemisch mit aliphatischen, cycloaliphatischen und/oder aromatischen Dicarbonsäurealkylestern und aliphastischen mehwertigen Alkohole oder Mischungen aus 2-Methylpentandiol-1,5 und/oder 2-Ethylbutandiol-1,4 und aliphatischen mehrwertigen Alkoholen oder aliphatische, cycloaliphatischen und/oder aromatischen Dicarbonsäurealkylester und 2-Methylpentandiol-1,5 und/oder 2-Ethylbutandiol-1,4 im Molverhältnis von 1:1 bis 1:2, vorzugsweise 1:l bis 1:1,5 verdünnungsmittelfrei oder in Gegenwart von Verdünnungsmitteln sowie katalysatorfrei oder vorzugweise unter Zusatz von Umesterungs katalysatoren umgeestert. Nach beendeter Umesterung, werden gegebenenfalls die überschüssigen Alkohole und gegebenenfalls Verdünnungsmittel vorzugsweise unter vermindertem Druck abdestilliert.

Vorzugsweise werden die Polyester-polyole durch Polykondensation unter azeotropen Bedingungen oder insbesondere in der Schmelze, katalysatorfrei oder vorzugsweise unter Zusatz von Veresterungskatalysatoren, in einer Atmosphäre aus Inertgasen, wie z.B. Stickstoff, Kohlenoxid, Helium, Argon u.a. bei Temperaturen von 80 bis 250°C, vorzugsweise 150° bis 220°C und insbesondere 180 bis 220°C gegebenenfalls unter vermindertem Druck bis zur gewünschten Säurezahl, die vorzugsweise kleiner als 2 ist, hergestellt. Als Verdünnungsmittel und/oder Wasserschleppmittel kommen beispielsweise Benzol, Toluol, Xylol, Chlorbenzol, Dichlorbenzol u.a. in Betracht. Die organischen Polycarbonsäuren und/oder -derivate und aliphatischen mehrwertigen Alkohole werden dabei in solchen Mengen eingesetzt, daß das Verhältnis von Carboxylgruppe und/oder Äquivalent reaktivem Carbonsäurederivatrest zu Hydroxylgruppe 1:1 bis 1,8, vorzugsweise 1:1,05 bis 1,2 beträgt. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise von 50 bis 150 mbar, polykondensiert. Hierzu sind üblicherweise Polykondensationszeiten von 10 bis 30 Stunden, vorzugsweise von 15 bis 20 Stunden erforderlich.

Zu den zur Herstellung der im wesentlichen geschlossenzelligen Urethan-oder Urethan-und Isocyanuratgruppen enthaltenden Hartschaumstoffen verwendbaren anderen Ausgangskomponenten ist folgendes auszuführen.

a) Als organische Polyisocyanate kommen vorzugsweise aromatische mehrwertige Isocyanate in Betracht, wobei insbesondere aromatische, gegebenenfalls modifizierte Polyisocyanate mit einem geringen Dampfdruck Verwendung finden. Als aromatische Polyisocyanate seien beispielhaft genannt 4,4'-, 2,4'-und 2,2'-Diphenylmethan-diisocyanat und die entsprechenden Isomerengemische, Polyphenyl-polymethylen-polyisocyanate und Gemische aus Diphenylmethan-diisocyanaten und Polyphenyl-polymethylen-polyisocyanaten (Roh-MDI).

Geeignet sind auch sogenannte modifizierte mehrwertige Isocyanate, d.h. Polyisocyanate, die durch chemische Umsetzung von aromatischen Di-und/oder Polyisocyanaten erhalten werden. In Betracht kommen beispielsweise Ester-, Harnstoff-, Biuret-, Allophanat-und vorzugsweise Urethan-, Uretonimin, Isocyanurat-und/oder Carbodiimidgruppen enthaltende aromatische Di-und/oder Polyisocyanate, z.B. auf Basis von 2,4-und 2,6-Toluylen-diisocyanaten und insbesondere solch auf Basis von 4,4'-, 2,4'-, 2,2'-Diphenylmethan-diisocyanaten und Roh-MDI. Die organischen Polyisocyanate können einzeln oder in Form von Mischungen eingesetzt werden.

Besonders gut bewährt haben sich und daher vorzugsweise verwendet werden Mischungen aus Diphenylmethan-diisocyanaten und Polyphenyl-polymethylen-polyisocyanaten mit einem Diphenylmethan-diisocyanat-Isomerengehalt von 20 bis 65 Gew.-%, vorzugsweise 20 bis 45 Gew.-%, bezogen auf das Gesamgewicht und modifizierte, insbesondere Carbodiimid-, Isocyanurat-, Urethan-und/oder Uretonimingruppen enthaltende Diphenylmethan-diisocyanate, Diphenylmethan-diisocyanat-Isomerengemische und Roh-MDI mit einem NCO-Gehalt von 33,6 bis 15 Gew.-%, vorzugsweise 31 bis 21 Gew.-%, bezogen auf das Gesamtgewicht.

b) Als höhermolekulare Polyole finden vorzugsweise die oben beschriebenen, Einheiten mit einer oder mehreren der Strukturen (I) bis (IV) gebunden enthaltenden Polyester-polyole Verwendung. Geeignet sind jedoch auch Polyolmischungen, die bestehen aus

bi) 30 bis ungefähr 100 Gew.-%, vorzugsweise 50 bis ungefähr 100 Gew.-% eines Polyester-polyols, das Einheiten mit einer oder mehreren der Strukturen (I) bis (IV) gebunden enthält und

bii) 70 bis ungefähr 0 Gew.-% vorzugsweise 50 bis ungefähr 0 Gew.-% eines üblichen Polyester-und/oder Polyether-polyols, wobei die Gew.-% bezogen sind auf das Gesamtgewicht der Polyolmischung.

Zur Herstellung der üblichen Polyester-polyole im Sinne der Erfindung finden als organische Dicarbonsäuren, die vorgenannten aromatischen Dicarbonsäuren, vorzugsweise Phthal-und/oder Terephthalsäure und aliphatische Dicarbonsäuren mit 2 bis 12, vorzugsweise 4 bis 8 Kohlenstoffatomen und die vorgenannten mehrwertigen, vorzugsweise zweiund/oder dreiwertigen Alkohole Verwendung, wobei die Polyester-polyole vorzugsweise keine oder nur in untergeordneten Mengen Einheiten mit den Strukturen (I), (II), (III) und/oder (IV) gebunden enthalten. Anstelle der Polycarbonsäuren können zur Herstellung der üblichen Polyester-polyole auch die entsprechenden Polycarbonsäurederivate oder Mischungen aus Polycarbonsäuren und/oder -derivaten eingesetzt werden.

Geeignete Polyether-polyole werden beispielweise hergestellt durch anionische Polymerisation von Alkylenoxiden oder Alkylenoxidmischungen mit 2 bis 4 Kohlenstoffatomen im Alkylenrest und einem oder mehreren Startermolekülen mit mindestens zwei reaktiven Wasserstoffatomen in Gegenwart von z.B. Alkalihydroxiden, wie Natrium-oder Kaliumhydroxid, oder Alkalialkoholaten als Katalysator.

Als Alkylenoxide seien beispielsweise 1,2-bzw. 2,3-Butylenoxid, Epichlorhydrin und vorzugsweise 1,2-Propylenoxid und Ethylenoxid genannt. Die Alkylenoxide können einzeln, alternierend nacheinander oder als Mischung verwendet werden. Zur Herstellung der di-bis octafunktionellen, vorzugsweise tri-bis hexafunktio-

5

nellen Polyether-polyole kommen als Startermoleküle beispielsweise in Betracht: Wasser, Dicarbonsäuren, wie z.B. Bernstein-, Glutar-, Adipin-, Phthal-und Terephthalsäure, gegebenenfalls N-mono-und N,N-bzw. N,N'-dialkylsubstituierte Diamine mit 1 bis 4 Kohlenstoffatomen im Alkylrest, wie N-mono-und, N,N-bzw. N,N'-dialkylsubstituiertes Ethylen-, 1,3-Propylen-, 1,3-bzw. 1,4-Butylen-, 1,5-Pentamethylenund 1,6-Hexamethylen-diamin, Phenylendiamine, 2,4-und 2,6-Toluylendiamin und 4,4'-, 2,4'-und 2,2'-Diamino-diphenylmethan, Alkanolamine, wie z.B. Ethanolamin, Diethanolamin, N-Methyl und N-Ethylethanolamin, N-Methyl-und N-Ethyl-di-ethanolamin und Triethanolamin sowie Ammoniak. Vorzugsweise verwendet werden jedoch zwei-bis achtwertige, insbesondere 3 bis 6-wertige Alkohole oder deren Gemische wie z.B. Ethan-, 1,2-bzw. 1,3-Propan-, 1,4-Butan-, 1,5-Pentan-, 1,6-Hexandiol, Diethylenglykol, Dipropylenglykol, Glycerin, Trimethylolpropan, Pentaerythrit und Zuckeralkohole, vorzugsweise Sorbit und Sucrose.

Die gegebenenfalls zusätzlich zur Verwendung kommenden üblichen Polyester-polyole und/oder Polyether-polyole können einzeln oder als Gemische eingesetzt werden.

c) Zur Herstellung der erfindungsgemäßen PU-PIR-Hartschaumstoffe haben sich die üblichen Cyclisierungs-und Polymerisationskatalysatoren (C) für Polyisocyanate bewährt. Als Beispiele seien genannt: starke Basen, wie quarternäre Ammoniumhydroxide, beispielsweise Benzyltrimethylammoniumhydroxid; Alkalimetallhydroxide, beispielsweise Natrium-oder Kaliumhydroxid; Alkalimetallalkoxide, beispielsweise Natriummethylat und Kaliumisopropylat; Trialkylphosphine, beispielsweise Triethylphosphin; Alkylaminoalkylphenole, beispielsweise 2,4,6-Tris-(dimethylaminomethyl)-phenol; 3-und/oder 4-Stellung substituierte Pyridine, beispielsweise 3-oder 4-Methylpyridin; metallorganische Salze, beispielsweise Tekrakis-(hydroxyethyl)-natriumborat; Friedel-Crafts-Katalysatoren, beispielsweise Aluminiumchlorid, Eisen-(III)-chlorid, Borfluorid und Zinkchlorid und Alkalimetallsalze von schwachen organischen Säuren und Nitrophenolaten, beispielsweise Kaliumoctoat, Kalium-2-ethyl-hexoat, Kaliumbenzoat, Natriumpikrat und Phthalimidkalium. Vorzugsweise verwendet werden die stark basischen N,N',N"-Tris-(dialkylaminoalkyl)-s-hexanhydrotriazine, beispielsweise das N,N,',N"-Tris-(dimethylaminopropyl)-s-hexanhydrotriazin, gegebenenfalls in Kombination mit aliphatischen niedermolekularen Mono-und/oder Dicarbonsäuren, beispielsweise Essigsäure und/oder Adipinsäure oder aromatischen Carbonsäuren, wie Benzoesäure. Die geeignete Menge an Polyisocyanuratkatalysatoren, die einzeln oder in Form von Mischungen eingesetzt werden können, ist abhängig von der Wirksamkeit des in Frage kommenden Katalysators und beträgt üblicherweise 0,1 bis 5 Gew.-%, bezogen auf das Gesamtgewicht der höhermolekularen Polyole (b).

Zur Beschleunigung der Reaktion zwischen den Hydroxylgruppen enthaltenden Ausgangstoffen und aromatischen Polyisocyanaten werden der Reaktionsmischung, insbesondere zur Herstellung von PU-Hartschaumstoffen, Polyurethankatalysatoren zweckmäßigerweise in Mengen von 0,1 bis 10 Gew.-%, vorzugsweise 1 bis 5 Gew.-%, bezogen auf das Gewicht der höhermolekularen Polyole (b) einverleibt. Als geeignete Polyurethankatalysatoren seien beispielsweise genannt; tertiäre Amine, wie Dimethylbenzylamin, N,N,N',N'-Tetramethyl-diaminoethyl-ether, Bis-(dimethylaminopropyl)-harnstoff, N-Methyl-bzw. N-Ethylmorpholin, Dimethylpiperazin, 1,2-Dimethylimidazol, 1-Aza-bicyclo-(3,3,0)-octan und vorzugsweise Triethylendiamin, Metallsalze, wie z.B. Zinndioctoat, Bleioctoat, Zinn-diethylhexoat und vorzugsweise Zinn-(II)salze und Dibutylzinndilaurat sowie insbesondere Mischungen aus tert. Aminen und organischen Zinnsalzen.

Bewährt hat sich auch die zusätzliche Mitverwendung von Polyurethankatalysatoren neben Polyiscyanuratkatalysatoren bei der Herstellung von PU-PIR-Hartschaumstoffen zur Steuerung oder Vereinheitlichung der Polyadditions-und Trimerisierungsreaktion.

d) Als organische, physikalisch wirdende Treibmittel kommen niedrig siedende Flüssigkeiten in Betracht, die unter dem Einfluß der exothermen Polyadditonsreaktion oder Polyadditions-und Polymerisationsreaktion verdampfen. Geeignet sind Flüssigkeiten, welche gegenüber dem organischen Polyisocyanat inert sind und vorteilhafterweise Siedepunkte unter 50°C aufweisen. Beispiele derartiger, vorzugs weise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden. Die Treibmittel werden zweckmäßigerweise in Mengen von 5 bis 60 Gew.-%, vorzugsweise von 20 bis 50 Gew.-%, bezogen auf das Gewicht an höhermolekularem Polyol verwendet.

Die erfindungsgemäßen PU-oder PU-PIR-Hartschaumstoffe werden vorzugsweise ohne zusätzliche Mitverwendung von üblichen Kettenverlängerungsmitteln und/oder Vernetzungsmitteln (e) hergestellt. Dennoch hat es sich in manchen Fällen, beispielsweise aus verarbeitungstechnischen Gründen, als zweckmäßig erwiesen, Kettenverlängerungsmittel und/oder Vernetzungsmittel einzusetzen. Geeignete Kettenverlängerungsmittel oder Vernetzungsmittel besitzen Molekulargewichte von 60 bis 400, vorzugsweise 60 bis 300 und weisen vorzugsweise 2 bis 4 reaktive Wasserstoffatome auf. In Betracht kommen beispielsweise aliphatische und/oder aromatische Diole mit 2 bis 14, vorzugsweise 2 bis 6 Kohlenstoffatomen, wie z.B. Propandiol, Pentandiol, Hexandiol-1,6 und vorzugsweise Ethandiol, Butandiol-1,4 und Bis-(2-hydroxyethyl)-hydrochinon, Diamine, wie z.B. Ethylendiamin und gegebenenfalls 3,3'-di bzw. 3,3',5,5'-tetraalkylsubstituierte 4,4'-Diamino-diphenylmethane, Alkanolamine, wie z.B. Triethanolamin, mehrwertige Alkohole, wie z.B. Glycerin, Trimethylolpropan und niedermolekulare hydroxylgruppenhaltige Polyalkylenoxide auf der Grundlage von Ethylen-und/oder 1,2-Propylendoxid und den vorgenannten Verbindungen als Startmolekülen. Sofern Kettenverlängerungsmittel und/oder Vernetzungsmittel eingesetzt werden, kommen diese in Mengen von 0 bis 30 Gew.-%, vorzugsweise von 5 bis 25 Gew.-%, bezogen auf das Gewicht der höhermolekularen Polyole (b) zur Anwendung.

Der Reaktionsmischung können gegebenenfalls auch noch Hilfsmittel und/oder Zusatzstoffe (f) einverleibt werden. Genannt seien beispielsweise oberflächenktive Substanzen, innere Formtrennmittel, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zur regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin oder stearinsaures Diethanolamin, Salze von Sulfonsäuren, z.B. Alkali-oder Ammoniumsalze von Dodecylbenzol-oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl-bzw. Ricinussäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile der Komponente (b), angewandt.

Als innere Formtrennmittel eignen sich beispielsweise Carbonsäureester und/oder Carbonsäureamide, die hergestellt werden durch Veresterung oder Amidierung einer Mischung aus Montansäure und mindestens einer aliphatischen Carbonsäure mit mindestens 10 Kohlenstoffatomen mit mindestens difunktionellen Alkanolaminen, Polyolen und/oder Polyaminen mit Molekulargewichten von 60 bis 400. Die inneren Formtrennmittel werden vorteilhafterweise in Mengen von 0,1 bis 10 Gew.-Teilen bezogen auf 100 Gew.-Teile der höhermolekularen Polyole (b) eingesetzt.

Als Füllstoffe, insbesondere verstärkend wirkende Füllstoffe sind die an sich bekannten üblichen organsichen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt: anorganische Füllstoffe, wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze, wie Kreide, Schwerspat und anorganische Pigmente, wie Cadmiumsulfid, Zinksulfid sowie Glas, Asbestmehl u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Asbest, Wollastonit und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyetherolen analog den Angaben der deutschen Patentschriften 11 11 394, 12 22 669 (US 3 304 273, 3 383 351, 3 523 093), 11 52 536 (GB 1 040 452) und 11 52 537 (GB 987 618) hergestellt werden sowie Filler-polyoxyalkylen-polyole, bei denen wäßrige Polymerdispersionen in Polyoxyalkylen-polyoldispersionen übergeführt werden.

Die anorganischen und organischen Füllstoffe werden der Reaktionsmischung vorteilhafterweise in Mengen von 0,5 bis 50 Gew.-%, vorzugsweise 1 bis 40 Gew.-%, bezogen auf das Gewicht der Komponente (a) bis (c), einverleibt.

Geeignete Flammschutzmittel sind beispielsweise Trikresylphosphat, Tris-2-chlorethylphosphat, Trischlorpropylphosphat und tris-2,3-dibrompropylphosphat.

Außer den bereits genannten halogensubstituierten Phosphaten können auch anorganische Flammschutzmitel, wie Aluminiumoxidhydrat, Antimontrioxid, Arsenoxid, Ammoniumpolyphosphat und Calciumsulfat zum Flammfestmachen der Hartschaumstoffe verwendet werden. Im allgemeinen hat es sich als zweckmäßig erwiesen, 5 bis 50 Gew.-Teile, vorzugsweise 5 bis 25 Gew.-Teile der genannten Flammschutzmittel für jeweils 100 Gew.-Teile der Komponente (b) zu verwenden.

Nähere Angaben über die obengenannten anderen üblichen Hilfs-und Zusatzstoffe sind der Fachliteratur, beispielsweise der Monographie von J.H. Saunders und K.C. Frisch "High Polymers", Band XVI, Polyurethane, Teile 1 and 2, Verlag Interscience Publishers 1962 bzw. 1964, zu entnehmen.

Zur Herstellung der PU-Hartschaumstoffe werden die organischen Polyisocyanate (a) und höhermolekularen Polyole (b) sowie gegebenenfalls Kettenverlängerungs-und/oder Vernetzungsmittel in solchen Mengen zur Reaktion gebracht, daß das Verhältnis von reaktiven Wasserstoffatomen zu NCO-Gruppen 1:0,8 bis 2, vorzugsweise 1:0,9 bis 1,5 und insbesondere 1:1 bis 1,2 beträgt.

Zur Herstellung von Urethan-und Isocyanuratgruppen enthaltenden Hartschaumstoffen haben sich Mengenverhältnisse von NCO-Gruppen der Polyisocyanate zu reaktiven Wasserstoffatomen der Komponenten (b) und gegebenenfalls (e) von 2 bis 60:1, vorzugsweise von 2 bis 6:1 und insbesondere von 2 bis 4,5:1 bewährt.

Die Urethan-oder Urethan-und Isocyanuratgruppen enthaltenden Hartschaumstoffe werden vorzugsweise nach dem one shot-Verfahren mittels der Hoch-oder Niederdrucktechnik hergestellt. Bei Verwendung einer Mischapparatur mit mehreren Zulaufdüsen können die gegebenenfalls temperierten Ausgangsstoffe (a) bis (d) sowie gegebenenfalls (c) und (f) einzeln zugeführt und in der Mischapparatur bei Temperaturen von 10 bis 80°C, vorzugsweise 15 bis 50°C intensiv vermischt werden. Als besonders zweckmäßig hat es sich jedoch erwiesen, nach dem Zweikomponenten-Verfahren zu arbeiten und höhermolekularen Polyole (b), Katalysatoren (c), Treibmittel (d), sowie gegebenenfalls Kettenverlängerung-und/oder Vernetzungsmittel (e) und Hilfsmittel und/oder Zusatzstoffe (f) zu der Komponente A zu vereinigen und als Komponente B die organischen Polyisocyanate (a) zu verwenden. Vorteilhaft ist hierbei beispielsweise, daß die Komponenten A und B eine beschränkte Zeit gelagert und raumsparend transportiert werden können und vor der Verarbeitung in den erforderlichen Mengenverhältnissen nur noch intensiv gemischt werden müssen.

Die erhaltenen Reaktionsmischungen können in offenen oder geschlossenen, zweckmäßigerweise temperierbaren Formwerkzeugen, z.B. aus Kunststoffen oder vorzugsweise Metall gegebenenfalls unter Verdichtung mit einem Verdichtungsgrad von 1,1 bis 8, vorzugsweise 1,5 bis 8 oder insbesondere 2 bis 6 verschäumt und aushärten gelassen werden.

Die erfindungsgemäßen im wesentlichen geschlossenzelligen Urethan-oder Urethan-und Isocyanuratgruppen enthaltenden Hartschaumstoffe besitzen Dichten von 25 bis 800 g/l, vorzugsweise von 25 bis 100 g/l, wobei Hartschaumstoffe mit niedrigen Dichten, z.B. von 25 bis 40 g/l, nach dem erfindungsgemäßen Verfahren besonders vorteilhaft hergestellt werden können. Die Produkte zeichnen sich durch eine sehr gute Hydrolysestabilität und gute mechanische Eigenschaften, insbesondere hohe Flammwidrigkeit und hervorragendes Wärmeisolationsvermögen, aus.

Die nach dem erfindungsgemäßen Verfahren hergestellte Urethan-oder Urethan-und Isocyanuratgruppen enthaltende Hartschaumstoffe finden insbesondere Verwendung zum Verstärken von mechanischen Konstruktionsteilen oder als Isoliermaterial.


Beispiel 1

Herstellung eines erfindungsgemäß verwendbaren Polyester-polyols

85 Gew.-Teile 2 Methylglutarsäuredimethylester,
15 Gew. Teile 2-Ethylbernsteinsäuredimethylester,
42 Gew.-Teile Triisopropanolamin und
42 Gew.-Teile Ethandiol
wurden bei Raumtemperatur unter Rühren intensiv gemischt, die Mischung auf 220°C erhitzt und danach bei dieser Temperatur in einer Stickstoffatmophäre unter Normaldruck und Abdestillieren des Methanols verestert. Die Polykondensation wurde unter Druckerniedrigung bis ca. 50 mbar zu Ende geführt.

Das erhaltene Polyester-polyol besaß eine Hydroxylzahl von 302 mg KOH/g, eine Säurezahl von 0,8 mg KOH/g, eine Viskosität bei 25°C von 2600 m.Pa.s und eine Trichlorfluormethan-Verträglichkeit von 80 g Trichlorfluormethan pro 100 g Polyester-polyol.


Vergleichsbeispiel A:

100 Gew.-Teile einer Mischung aus Adipinsäure, Glutarsäure, Bernsteinsäure,
48 Gew.-Teile Triisopropanolamin und
50 Gew.-Teile Ethandiol
wurden bei Raumtemperatur unter Rühren intensiv gemischt, die Mischung auf 220°C erhitzt und danach bei dieser Temperatur in einer Stickstoffatmosphäre unter Normaldruck und Abdestillieren des Kondensationswassers bis zum Erreichen einer Säurezahl von ungefähr 20 verestert. Anschließend wurde die Polykondensation unter Druckerniedrigung bis ca. 50 mbar in 10 Stunden zu Ende geführt.

Das erhaltene Polyester-polyol besaß eine Hydroxylzahl von 300 mg KOH/g, eine Säurezahl von 1,0 mg KOH/g, eine Viskosität bei 25°C von 4000 mPa.s und eine Trichlorfluormethan-Verträglichkeit von 36 g Trichlorfluormethan pro 100 g Polyester-polyol.

Beispiele 2 und 3 und Vergleichsbeispiele B and C

Herstellung von Urethan-und Isocyanuratgruppen enthaltenden Hartschaumstoffen

Allgemeine Herstellungsvorschrift

A-Komponente: Mischung aus Polyester-polyol, Polyether-polyol, Flammschutzmittel, Schaumstabilisator, Katalysator und Treibmittel

B-Komponente: Mischung aus Diphenylmethan-diisocyanaten und Polyphenyl-polymethylen-polyisocyanaten mit einem NCO-Gehalt von 31 Gew.-%, im folgenden Roh-MDI genannt.

Die Komponenten A und B wurden bei 23°C intensiv gemischt und in einem Karton mit den Abmessungen 35 x 35 x 39 cm aufschäumen gelassen.

Die Art und Mengen der verwendeten Ausgangskomponenten, die ermittelten Schäumzeiten und die an den erhaltenen Hartschaumstoffen gemessenen mechanischen Eigenschaften sind in der folgenden Tabelle zusammengefaßt.

Für die in der Tabelle genannten Ausgangsstoffe wurden folgende Abkürzungen gewählt

PES 1: Polyester-polyol, hergestellt nach Beispiel 1

PES A: Polyester-polyol, hergestellt nach Vergleichsbeispiel A.

PE: Polyether-polyol mit einer durchschnittlichen Funktionalität von 4,3 und einer Hydroxylzahl von 400, hergestellt durch Polyaddition von 1,2-Propylenoxid an eine Sucrose-Glycerin Mischung als Startermoleküle.

Fyrol: Mischung aus [R]Fyrol DMMP, Flammschutzmittel der Firma Stauffer Chemical Corp.

und PHT-4-Diol, Flammschutzmittel der Firma Great Lakes Silikonöl: oberflächenaktive Substanz [R]-Tegostab B 8408 der Firma Goldschmidt AG

PIR-Kat: Kaliumacetat, 20 gew.-%ige Lösung in Ethylenglykol,

DMCH: Dimethylcyclohexylamin

$CCl_3F$: Trichlorfluorethan

B2-Test: Brandtest nach DIN 4102

M I: Brandtest der Klasse Epiradiateur

Verträglichkeit: Verträglichkeit von g Trichlorfluormethan mit 100 g der Komponente A.

Tabelle

| Beispiele | | 2 | | 3 | |
| Vergleichsbeispiele | | | B | | C |
|---|---|---|---|---|---|
| **Ausgangsstoffe:** | | | | | |
| Roh–MDI | [Gew.–Teile] | 223 | 223 | 200 | 200 |
| PES 1 | [Gew.–Teile] | 50 | – | 62 | |
| PES A | [Gew.–Teile] | – | 50 | – | 62 |
| PE | [Gew.–Teile] | 40 | 40 | 15 | 15 |
| Fyrol | [Gew.–Teile] | 10 | 10 | 16 | 16 |
| Silikonöl | [Gew.–Teile] | 1,5 | 1,5 | 2 | 2 |
| PIR–Kat | [Gew.–Teile] | 1,2 | 1,2 | 1,5 | 1,5 |
| DMCH | [Gew.–Teile] | 0,2 | 0,2 | 0,2 | 0,2 |
| $CCl_3F$ | [Gew.–Teile] | 47 | 47 | 35 | 35 |
| **Schäumzeiten:** | | | | | |
| Startzeit | [sec] | 57 | 55 | 16 | 17 |
| Abbindezeit | [sec] | 140 | 120 | 35 | 35 |
| Steigzeit | [sec] | 180 | 175 | 70 | 71 |
| **mechanische Eigenschaften:** | | | | | |
| Raumgewicht | [g/l] | 35,4 | 36,9 | 37 | 36 |
| B2–Test: Kante | [cm] | 10 | 14 | 6 | 7 |
| Fläche | [cm] | 10 | 13 | 7 | 7 |
| M 1 | [sec] | > 5 | > 5 | 1 | 1 |
| Verträglichkeit | [g/100 g] | 97 | 50 | 95 | 45 |

**Ansprüche**

1. Verfahren zur Herstellung von im wesentlichen geschlossenzelligen, Urethan-oder Urethan-und Isocyanuratgruppen enthaltenden Hartschaumstoffen durch Umsetzung von
a) organischen Polyisocyanaten mit
b) höhermolekularen Polyolen in Gegenwart von
c) Katalysatoren und
d) Treibmitteln sowie gegebenenfalls
e) Kettenverlängerungs-und/oder Vernetzungsmitteln,
f) Hilfsmitteln und/oder Zusatzstoffen
dadurch gekennzeichnet, daß man als Polyole (b) Polyester-polyole verwendet, die Einheiten mit einer oder mehreren der Strukturen
-O-CH₂-CH(CH₃)-CH₂-CH₂-CH₂-O- (I),
-O-CH₂-CH(C₂H₅)-CH₂-CH₂-O- (II),
-OC-CH(CH₃)-CH₂-CH₂-CO- (III) und
-OC-CH(C₂H₅)-CH₂-CO- (IV)
gebunden enthalten

2. Verfahren nach Anspruch 1, dadurch gekennzeichnet, daß die als Polyole (b) verwendeten Polyester-polyole Einheiten der Struktur
-O-CH₂-CH(CH₃)-CH₂-CH₂-CH₂-O- (I)

und/oder

-O-CH₂-CH(C₂H₅)-CH₂-CH₂-O-     (II)

gebunden enthalten.

3. Verfahren nach Anspruch 2, dadurch gekennzeichnet, daß die als Polyole, (b) verwendeten Polyester-polyole Einheiten der Struktur

-OC-CH(CH₃)-CH₂-CH₂-CO-     (III)

und/oder

-OC-CH(C₂H₅)-CH₂-CO-     (IV)

gebunden enthalten.

4. Verfahren nach Anspruch 2, dadurch gekennzeichnet, daß die als Polyole (b) verwendeten Polyester-polyole zu mindestens 20 Gew.-%, bezogen auf das Gesamtgewicht, aus Einheiten mit den Strukturen (I), (II), (III) und/oder (IV) bestehen.

5. Verfahren nach Anspruch 1, dadurch gekennzeichnet, daß die als Polyole (b) verwendeten Polyester-polyole eine

durchschnittliche Funktionalität von 2 bis 3,

eine Hydroxylzahl von 100 bis 400,

eine Säurezahl von kleiner als 10 und

eine Viskosität bei 25°C von 200 bis 10⁵ m.Pa.s besitzen.

6. Verfahren nach Anspruch 1, dadurch gekennzeichnet, daß man als Polyole (b) Mischungen verwendet, die bestehen aus

bi) 30 bis ungefähr 100 Gew.-% mindestens eines Polyester-polyols, das Einheiten mit einer oder mehreren der Strukturen (I), (II), (III) und (IV) gebunden enthält und

bii) 70 bis ungefähr 0 Gew.-% eines üblichen Polyester-und/oder Polyether-polyols,

wobei die Gew.-% bezogen sind auf das Gesamtgewicht der Polyolmischung.

7. Verfahren nach Anspruch 1, dadurch gekennzeichnet, daß die als Polyole (b) verwendeten Polyester-polyole hergestellt werden durch Polykondensation von

2-Methylglutarsäure, 2-Ethylbernsteinsäure und/oder organischen Dicarbonsäuren mit

2-Methylpentandiol-1,5, 2-Ethylbutandiol-1,4 und/oder

aliphatischen 2-bis 4-wertigen Alkoholen mit der Maßabe, daß die eingesetzten Ausgangsstoffe mindestens eine Verbindung aus der Gruppe 2-Methylglutarsäure, 2-Ethylbernsteinsäure,

2-Methylpentandiol-1,5 und/oder 2-Ethylbutandiol-1,4 enthalten.

8. Verfahren nach Anspruch 1, dadurch gekennzeichnet, daß die im wesentlichen geschlossenzelligen Urethan-oder Urethan-und Isocyanuratgruppen enthaltenden Hartschaumstoffe Dichten von 25 bis 100 g/l besitzen.

9. Verfahren nach Anspruch 1, dadurch gekennzeichnet, daß man als organische Polyisocyanate (a) eine Mischung aus Diphenylmethan-diisocyanaten und Polyphenyl-polymethylen-polyisocyanaten mit einem Diphenylmethan-diisocyanat-Isomerengehalt von 20 bis 65 Gew.-% verwendet.

10. Verwendung der im wesentlichen geschlossenzelligen, Urethan-oder Urethan-und Isocyanuratgruppen enthaltenden Hartschaumstoffe, hergestellt nach dem Verfahren gemäß Anspruch 1 zum Verstärken von mechanischen Konstruktionsteilen oder als Isoliermaterial.